# EUROPÄISCHE PATENTSCHRIFT

(11) **EP 3 394 412 B1**
(45) Veröffentlichungstag und Bekanntmachung des Hinweises auf die Patenterteilung: **17.06.2020**
(21) Anmeldenummer: 16800995.9
(22) Anmeldetag: 24.11.2016
(51) Int. Cl.: F02D 19/08, F02D 41/00, F02D 41/24, F02D 41/28

(54) **VERFAHREN ZUR ERMITTLUNG DER ZUSAMMENSETZUNG DES ZUM BETRIEB EINES VERBRENNUNGSMOTORS VERWENDETEN KRAFTSTOFFES**
METHOD FOR DETERMINING THE COMPOSITION OF THE FUEL USED TO OPERATE AN INTERNAL COMBUSTION ENGINE
PROCÉDÉ POUR DÉTERMINER LA COMPOSITION DU CARBURANT UTILISÉ POUR FAIRE FONCTIONNER UN MOTEUR À COMBUSTION INTERNE

(30) Priorität: 21.12.2015 DE 102015226138
(43) Veröffentlichungstag der Anmeldung: 31.10.2018
(73) Patentinhaber: Vitesco Technologies GmbH, 30165 Hannover (DE)
(72) Erfinder: BRAUN, Tobias, 93152 Undorf (DE); HAFT, Gerhard, 93138 Lappersdorf (DE); LIST, Rainer, 93059 Regensburg (DE)
(86) Internationale Anmeldenummer: PCT/EP2016/078736
(87) Internationale Veröffentlichungsnummer: WO 2017/108322

(56) Entgegenhaltungen:
- EP-A1- 2 581 588
- EP-A1- 2 725 216
- WO-A1-2014/154227
- US-A- 5 697 346
- US-A1- 2009 178 474

## Beschreibung

Die vorliegende Erfindung betrifft ein Verfahren zur Ermittlung der Zusammensetzung des im Betrieb eines Verbrennungsmotors verwendeten Kraftstoffes aus dem Saugrohrdrucksignal während des Betriebs des Verbrennungsmotors.

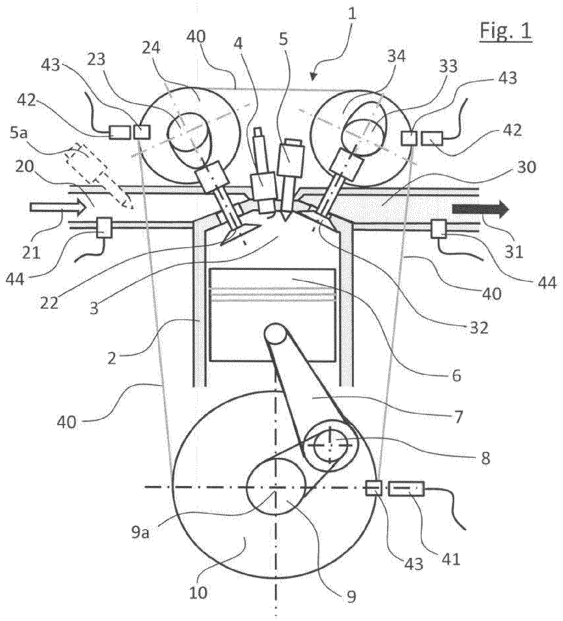

Hubkolben-Verbrennungsmotoren, die in diesem Zusammenhang und im Folgenden verkürzt auch nur als Verbrennungsmotoren bezeichnet werden, weisen ein oder mehrere Zylinder auf in denen jeweils ein Hubkolben angeordnet ist. Zur Veranschaulichung des Prinzips eines Hubkolben-Verbrennungsmotors wird im Folgenden Bezug auf Figur 1 genommen, die beispielhaft einen Zylinder eines ggf. auch mehrzylindrigen Verbennungsmotors mit den wichtigsten Funktionseinheiten darstellt.

Der jeweilige Hubkolben 6 ist linear beweglich im jeweiligen Zylinder 2 angeordnet und schließt mit dem Zylinder 2 einen Brennraum 3 ein. Der jeweilige Hubkolben 6 ist über ein sogenanntes Pleuel 7 mit einem jeweiligen Hubzapfen 8 einer Kurbelwelle 9 verbunden, wobei der Hubzapfen 8 exzentrisch zur Kurbelwellendrehachse 9a angeordnet ist. Durch die Verbrennung eines Kraftstoff-Luft-Gemisches im Brennraum 3 wird der Hubkolben 6 linear "abwärts" angetrieben. Die translatorische Hubbewegung des Hubkolbens 6 wird mittels Pleuel 7 und Hubzapfen 8 auf die Kurbelwelle 9 übertragen und in eine Rotationsbewegung der Kurbelwelle 9 umgesetzt, die den Hubkolben 6 aufgrund ihrer Massenträgheit, nach Überwindung eines unteren Totpunktes im Zylinder 2 wieder in Gegenrichtung "aufwärts" bis zu einem oberen Totpunkt bewegt. Um einen kontinuierlichen Betrieb des Verbrennungsmotors 1 zu ermöglichen, muss während eines sogenannten Arbeitsspiels eines Zylinders 2 zunächst der Brennraum 3 mit dem Kraftstoff-Luft-Gemisch befüllt, das Kraftstoff-Luft-Gemisch im Brennraum 3 verdichtet, dann gezündet (im Falle eines Benzin-Verbrennungsmotors mittels Zündkerze und im Falle eines Diesel-Verbrennungsmotors durch Selbstentzündung) und zum Antrieb des Hubkolbens 6 verbrannt werden und schließlich das nach der Verbrennung verbleibende Abgas aus dem Brennraum 3 ausgeschoben werden. Durch kontinuierliche Wiederholung dieses Ablaufs ergibt sich ein kontinuierlicher Betrieb des Verbrennungsmotors 1 unter Abgabe einer zur Verbrennungsenergie proportionalen Arbeit.

Je nach Motorkonzept ist ein Arbeitsspiel des Zylinders 2 in zwei über eine Kurbelwellenumdrehung (360°) verteilte Takte (Zweitaktmotor) oder in vier über zwei Kurbelwellenumdrehungen (720°) verteilte Takte (Viertaktmotor) gegliedert.

Als Antrieb für Kraftfahrzeuge hat sich bis heute der Viertaktmotor durchgesetzt. In einem Ansaugtakt wird, bei Abwärtsbewegung des Hubkolbens 6, Kraftstoff-Luft-Gemisch 21 (bei Saugrohreinspritzung mittels Einspritzventil 5a, in Fig. 1 als Alternative gestrichelt dargestellt) oder auch nur Frischluft (bei Kraftstoff-Direkteinspritzung mittels Einspritzventil 5) aus dem Ansaugtrakt 20 in den Brennraum 3 eingebracht. Im folgenden Verdichtungstakt wird, bei Aufwärtsbewegung des Hubkolbens 6, das Kraftstoff-Luft-Gemisch oder die Frischluft im Brennraum 3 verdichtet sowie ggf. separat Kraftstoff mittels eines Einspritzventils 5 eingespritzt. Im folgenden Arbeitstakt wird das Kraftstoff-Luft-Gemisch, zum Beispiel beim Benzin-Verbrennungsmotor mittels einer Zündkerze 4, gezündet, verbrannt und bei Abwärtsbewegung des Hubkolbens 6 unter Abgabe von Arbeit entspannt. Schließlich wird in einem Ausschiebetakt, bei erneuter Aufwärtsbewegung des Hubkolbens 6, das verbleibende Abgas 31 aus dem Brennraum 3 in den Abgastrakt 30 ausgeschoben.

Die Abgrenzung des Brennraumes 3 zum Ansaugtrakt 20 oder Abgastrakt 30 des Verbrennungsmotors 1 erfolgt in der Regel und insbesondere bei dem hier zugrungegelegten Beispiel über Einlassventile 22 und Auslassventile 32. Die Ansteuerung dieser Ventile erfolgt nach heutigem Stand der Technik über mindestens eine Nockenwelle. Das gezeigte Beispiel verfügt über eine Einlassnockenwelle 23 zur Betätigung der Einlassventile 22 und über eine Auslassnockenwelle 33 zur Betätigung der Auslassventile 32. Zwischen den Ventilen und der jeweiligen Nockenwelle sind zumeist noch weitere, hier nicht dargestellte, mechanische Bauteile zur Kraftübertragung vorhanden, die auch einen Ventilspielausgleich beinhalten können (z.B. Tassenstößel, Kipphebel, Schlepphebel, Stößelstange, Hydrostößel etc.).

Der Antrieb der Einlassnockenwelle 23 und der Auslassnockenwelle 33 erfolgt über den Verbrennungsmotor 1 selbst. Hierzu werden die Einlassnockenwelle 23 und der Auslassnockenwelle 33 jeweils über geeignete Einlassnockenwellen-Steueradapter 24 und Auslassnockenwellen-Steueradapter 34, wie zum Beispiel Zahnräder, Kettenräder oder Riemenräder mithilfe eines Steuergetriebes 40, das zum Beispiel ein Zahnradgetriebe, eine Steuerkette oder einen Steuerzahnriemen aufweist, in vorgegebener Lage zueinander und zur Kurbelwelle 9 über einen entsprechenden Kurbelwellen-Steueradapter 10, der entsprechend als Zahnrad, Kettenrad oder Riemenrad ausgebildet ist, mit der Kurbelwelle 9 gekoppelt. Durch diese Verbindung ist die Drehlage der Einlassnockenwelle 23 und der Auslassnockenwelle 33 in Relation zur Drehlage der Kurbelwelle 9 prinzipiell definiert. In Figur 1 ist beispielhaft die Kopplung zwischen Einlassnockenwelle 23 und der Auslassnockenwelle 33 und der Kurbelwelle 9 mittels Riemenscheiben und Steuerzahnriemen dargestellt.

Der über ein Arbeitsspiel zurückgelegte Drehwinkel der Kurbelwelle wird im Weiteren als Arbeitsphase oder einfach nur Phase bezeichnet. Ein innerhalb einer Arbeitsphase zurückgelegter Drehwinkel der Kurbelwelle wird dem entsprechend als Phasenwinkel bezeichnet. Der jeweils aktuelle Kurbelwellen-Phasenwinkel der Kurbelwelle 9 kann mittels eines mit der Kurbelwelle 9 oder dem Kurbelwellen-Steueradapter 10 verbundenen Lagegebers 43 und einem zugeordneten Kurbelwellen-Lagesensor 41 laufend erfasst werden. Dabei kann der Lagegeber 43 zum Beispiel als Zähnerad mit einer Mehrzahl von äquidistant über den Umfang verteilt angeordneten Zähnen ausgeführt sein, wobei die Anzahl der einzelnen Zähne die Auflösung des Kurbelwellen-Phasenwinkelsignals bestimmt.

Ebenso können ggf. zusätzlich die aktuellen Phasenwinkel der Einlassnockenwelle 23 und der Auslassnockenwelle 33 mittels entsprechender Lagegeber 43 und zugeordneter Nockenwellenlagesensoren 42 laufend erfasst werden.

Da sich der jeweilige Hubzapfen 8 und mit ihm der Hubkolben 6, die Einlassnockenwelle 23 und mit ihr das jeweilige Einlassventil 22 sowie die Auslassnockenwelle 33 und mit ihr das jeweilige Auslassventil 32 durch die vorgegebene mechanische Kopplung in vorgegebener Relation zueinander und in Abhängigkeit von der Kurbelwellendrehung bewegen, durchlaufen diese Funktionskomponenten synchron zur Kurbelwelle die jeweilige Arbeitsphase. Die jeweiligen Drehlagen und Hubpositionen von Hubkolben 6, Einlassventilen 22 und Auslassventilen 32 können so, unter Berücksichtigung der jeweiligen Übersetzungsverhältnisse, auf den durch den Kurbelwellen-Lagesensor 41 vorgegebenen Kurbelwellen-Phasenwinkel der Kurbelwelle 9 bezogen werden. Bei einem idealen Verbrennungsmotor ist somit jedem bestimmten Kurbelwellen-Phasenwinkel ein bestimmter Hubzapfenwinkel, ein bestimmter Kolbenhub, ein bestimmter Einlassnockenwellenwinkel und somit ein bestimmter Einlassventilhub sowie ein bestimmter Auslassnockenwellenwinkel und somit ein bestimmter Auslassnockenwellenhub zuordenbar. Das heißt alle genannten Komponenten befinden sich bzw. bewegen sich in Phase mit der sich drehenden Kurbelwelle 9.

Bei modernen Verbrennungsmotoren 1 können innerhalb der mechanischen Koppelstrecke zwischen Kurbelwelle 9 und Einlassnockenwelle 23 sowie der Auslassnockenwelle 33 jedoch zusätzliche Stellglieder vorhanden sein, zum Beispiel integriert in den Einlassnockenwellenadapter 24 und den Auslassnockenwellenadapter 34, die einen gewünschten steuerbaren Phasenversatz zwischen der Kurbelwelle 9 und Einlassnockenwelle 23 sowie der Auslassnockenwelle 33 bewirken. Diese sind als sogenannte Phasensteller bei sogenannten variablen Ventiltrieben bekannt.

Für einen optimalen Betrieb des Verbrennungsmotors (bezüglich Emissionen, Verbrauch, Leistung, Laufruhe etc.) sollte die während des Ansaugtaktes angesaugte Frischgasladung bestmöglich bekannt sein und die zugemessene Kraftstoffmenge möglichst genau darauf abgestimmt sein, um zum Beispiel einen Betrieb mit Lambda (λ)=1, also bei der für die vollständige Verbrennung des zuzumessenden Kraftstoffes erforderlichen Mindestmenge an Sauerstoff gewährleisten zu können.

Die angesaugte Frischgasladung ist abhängig von verschiedenen Faktoren, wie zum Beispiel der konstruktiven Gegebenheiten des Verbrennungsmotors, dem aktuellen Betriebspunkt sowie der aktuellen Einstellungen verschiedener Stelleinrichtungen, wie zum Beispiel einer Drosselklappe. Stand der Technik zur Bestimmung der Frischgasladung sind die Vermessung eines sogenannten Referenz-Verbrennungsmotors in allen auftretenden Betriebszuständen (Drehzahl, Last, Ansteuerung sämtlicher Aktuatoren, unterschiedliche Ventilhübe, Ansteuerung von Klappen, Ansteuerung der Phasensteller für Einlass- und Auslassventil, Abgasturbolader, Kompressor etc.) und die Speicherung dieser Messwerte (bzw. Derivate davon oder Modellansätze, die das Verhalten wiedergeben) in entsprechenden Kennfeldern auf dem Motorsteuergerät eines entsprechenden Serien-Verbrennungsmotors. Alle baugleichen, in Serie produzierten Verbrennungsmotoren der gleichen Baureihe werden mit diesem erzeugten Referenzdatensatz betrieben. In erster Näherung kann somit die Frischgasladung als bekannt angenommen werden.

Die zugehörige, zuzumessende, insbesondere einzuspritzende Kraftstoffmenge wird dann gemäß dem vorgegebenen, von der Kraftstoffart bzw. der Kraftstoffqualität oder der Kraftstoffzusammensetzung abhängigen Luft-Kraftstoff-Verhältnis (A/F-Ratio) des jeweiligen Kraftstoffes berechnet.

Je nach verwendetem Kraftstoff ergeben sich also Unterschiede. So liegen zum Beispiel bei Mischkraftstoffen aus Super-Benzin und Ethanol folgende Luft-Kraftstoff-Verhältnisse vor:

| | | |
|---|---|---|
| 100 Vol% Superbezin | 0 Vol% Ethanol (E0) => | 14,5 |
| 75 Vol% Superbenzin | 25 Vol% Ethanol (E25) => | 13,1 |
| 50 Vol% Superbenzin | 50 Vol% Ethanol (E50) => | 11,8 |
| 25 Vol% Superbenzin | 75 Vol% Ethanol (E75) => | 10,4 |
| 0 Vol% Superbenzin | 100 Vol% Ethanol (E100) => | 9,0 |

Der Ethanol-Anteil ist in der Bezeichnung des Mischkraftstoffes jeweils in Volumenprozent angegeben, das heißt der Mischkraftstoff E25 besteht demnach zu 75 Vol% aus Super-Benzin und zu 25 Vol% aus Ethanol.

Zum optimalen Betrieb des Verbrennungsmotors in Bezug auf Verbrauch, Laufruhe und Emissionen muss somit auch die Zusammensetzung des im jeweils aktuellen Betrieb verwendeten Kraftstoffes bestmöglich bekannt sein, da sich sonst fehlerhaft zugemessene Kraftstoffmengen ergeben können. Desweiteren können verschiedene Kraftstoffe oder Kraftstoff-Zusammensetzungen unterschiedliche Eigenschaften, wie zum Beispiel unterschiedliche Klopffestigkeiten, aufweisen. Dies kann zur Optimierung des Betriebs weitere Anpassungen, wie zum Beispiel des Einspritzzeitpunktes oder des Zündzeitpunktes, erforderlich werden lassen.

Da Kraftstoffe gegebenenfalls nicht immer in gleicher Qualität bzw. Zusammensetzung zur Verfügung stehen, können hier von Tankfüllung zu Tankfüllung Unterschiede auftreten, die den Betrieb des Verbrennungsmotors negativ beeinflussen.

Aus diesem Grund sind aus dem Stand der Technik bereits diverse Verfahren und Vorrichtungen bekannt, die die Ermittlung der Kraftstoffzusammensetzung bzw. der Kraftstoffqualität zum Ziel haben.

So ist beispielsweise in dem Dokument DE 10 2009 031 159 B3 ein Verfahren und eine Vorrichtung zum Bestimmen einer Kraftstoffqualität, insbesondere einer Gemischzusammensetzung eines Kraftstoffs offenbart. Das Verfahren beruht auf der Bestimmung eines elektrischen Parameters des Kraftstoffes mittels eines einen Stator und einen Rotor aufweisenden Elektromotors, wobei in einem Spalt zwischen Rotor und Stator ein elektrischer Parameter des darin befindlichen Kraftstoffs bestimmt wird, welcher ein Maß für die Kraftstoffqualität ist.

Auch aus dem Dokument DE 10 2009 017 207 B4 ist beispielsweise ein Verfahren zur Detektion der Kraftstoffqualität bekannt, bei dem mittels eines Kraftstoffqualitätsberechnungsmodul ein Kraftstoffqualitätswert auf der Grundlage eines Drehmoments des Motors und einer Motordrehzahländerung, die über eine erste Zeitspanne gemessen wird, berechnet wird.

Weiterhin offenbart auch Dokument DE 10 2011 077 404 B4 ein Verfahren zur Bestimmung des Kraftstofftyps, das auf einer hochgenauen Zuführung einer bestimmten Kraftstoff-Differenz-Fördermenge in einen Kraftstoff-Hochdruckspeicher basiert. Aus der entsprechenden Druckanstiegskurve wird eine Messwertkurve ermittelt, die mit in einer zugehörigen Steuervorrichtung gespeicherten Vergleichswertkurven für unterschiedliche Kraftstoffqualitäten verglichen wird. Bei einer ausreichenden Übereinstimmung der Messwertkurve mit einer Vergleichswertkurve wird die zugeordnete Kraftstoffqualität bestimmt.

Ein weiteres Beispiel von Verfahren zur Ermittlung von Kraftstoffzusammensetzung wird im Dokument WO2014/154227 A1 offenbart.

Die bekannten Verfahren erfordern häufig zusätzliche Sensoren oder sind aufgrund schwer zu erfassender Umgebungseinflüsse kompliziert durchzuführen und im Ergebnis unbefriedigend.

Die Aufgabe besteht deshalb darin, möglichst ohne zusätzliche Sensoranordnung und vorrichtungstechnischen Aufwand, eine möglichst exakte Bestimmung der Qualität bzw. der Zusammensetzung des im aktuell laufenden Betrieb verwendeten Kraftstoffes zu ermöglichen, um entsprechende Anpassungen der Betriebsparameter zur Optimierung des laufenden Betriebs vornehmen zu können.

Diese Aufgabe wird gelöst durch das erfindungsgemäße Verfahren zur Ermittlung der Zusammensetzung des zum Normalbetrieb eines Verbrennungsmotors verwendeten Kraftstoffes gemäß Hauptanspruch. Fortbildungen und Ausführungsvarianten des erfindungsgemäßen Verfahrens sind Gegenstand der abhängigen Ansprüche.

Gemäß dem erfindungsgemäßen Verfahren werden die einem Zylinder des Verbrennungsmotors zuordenbaren dynamische Druckschwingungen im Einlasstrakt des betreffenden Verbrennungsmotors, an einem definierten Betriebspunkt bei saugsynchroner Kraftstoffeinspritzung, im Normalbetrieb gemessen und daraus ein entsprechendes Druckschwingungssignal erzeugt. Gleichzeitig wird, sozusagen als Referenz- oder Bezugs-Signal, ein Kurbelwellen-Phasenwinkelsignal des Verbrennungsmotors ermittelt.

Ein möglicher Betriebspunkt wäre zum Beispiel der Leerlaufbetrieb bei vorgegebener Drehzahl. Unter saugsynchroner Einspritzung ist dabei eine Einspritzung in einem Zeitraum zu verstehen, während dessen bei geöffnetem Einlassventil Frischgas in den Brennraum zugeführt wird. Dies kann durch Einspritzung des Kraftstoffes in das Saugrohr oder direkt in den Brennraum des jeweiligen Zylinders bei gleichzeitig geöffnetem Einlassventil erfolgen. Der Normalbetrieb kennzeichnet den bestimmungsmäßigen Betrieb des Verbrennungsmotors, beispielsweise in einem Kraftfahrzeug, wobei der Verbrennungsmotor ein Exemplar einer Serie von baugleichen Verbrennungsmotoren ist. Weitere gebräuchliche Bezeichnungen für einen Solchen Verbrennungsmotor wären Serien-Verbrennungsmotor oder Feld-Verbrennungsmotor.

Aus dem Druckschwingungssignal wird nun mit Hilfe Diskreter-Fourier-Transformation die Ist-Phasenlage einer ausgesuchten Signalfrequenz der gemessenen Druckschwingungen in Bezug auf das Kurbelwellen-Phasenwinkelsignal ermittelt. In weiterer Folge wird dann auf Basis der ermittelten Ist-Phasenlage, unter Heranziehung von Referenz-Phasenlagen der gleichen Signalfrequenz für unterschiedliche Kraftstoffzusammensetzungen, die Zusammensetzung des aktuell verwendeten Kraftstoffes ermittelt.

Die Erfindung beruht auf der Erkenntnis, dass, unter der Voraussetzung einer saugsynchronen Kraftstoffeinspritzung, zwischen der Zusammensetzung des zum Betrieb verwendeten Kraftstoffs und der Phasenlage der dynamischen Druckschwingungen im Einlasstrakt des Verbrennungsmotors ein eindeutiger Zusammenhang besteht. Dieser Zusammenhang zeigt sich insbesondere bei Ottomotoren beispielsweise im Zusammenhang mit den unterschiedlichen Anteilen an Superkraftstoff und Ethanol. Physikalische Ursache für diesen Zusammenhang sind die unterschiedlichen Verdampfungsenthalpien der verwendeten Kraftstoffzusammensetzungen. Beispielsweise weist ein E0-Kraftstoff eine Verdampfungsenthalpie von ca. 350kJ/kg auf, wogegen ein E100-Kraftstoff eine Verdampfungsenthalpie von ca. 920 kJ/kg aufweist. Bei saugsynchroner Einspritzung führen diese unterschiedlichen Verdampfungsenthalpien zu einer unterschiedlichen Abkühlung der Frischgasladung, wodurch sich wiederum die Dichte und damit die Schall-Ausbreitungsgeschwindigkeit in der Frischgasladung ändern und somit letztlich die Ausbreitung der Druckwellen im Ansaugtrakt messbar verändert wird.

Zur Analyse des im Ansaugtrakt des Verbrennungsmotors aufgenommenen Druckschwingungssignals, wird dieses einer Diskreten Fourier-Transformation (DFT) unterzogen. Dazu kann ein als Fast Fourier-Transformation (FFT) bekannter Algorithmus zur effizienten Berechnung der DFT herangezogen werden. Mittels DFT wird nun das Druckschwingungssignal in einzelne Signalfrequenzen zerlegt, die im Weiteren separat vereinfacht bezüglich ihrer Amplitude und der Phasenlage analysiert werden können. Im vorliegenden Fall hat sich gezeigt, dass insbesondere die Phasenlage ausgesuchter Signalfrequenzen des Druckschwingungssignals in Abhängigkeit stehen zu der verwendeten Kraftstoffzusammensetzung. Dazu werden nur diejenigen Signalfrequenzen herangezogen, die der Ansaugfrequenz, als Grundfrequenz oder 1. Harmonische, des Verbrennungsmotors oder einem Vielfachen der Ansaugfrequenz, also der 2. bis n. Harmonischen, entsprechen, wobei die Ansaugfrequenz wiederum in eindeutigem Zusammenhang mit der Drehzahl des Verbrennungsmotors steht. Für zumindest eine ausgesuchte Signalfrequenz wird dann, unter Heranziehung des parallel erfassten Kurbelwellen-Phasenwinkelsignals, die Phasenlage dieser ausgesuchten Signalfrequenzen in Bezug auf den Kurbelwellen-Phasenwinkel ermittelt.

Um nun aus den so ermittelten Phasenwinkeln der ausgesuchten Signalfrequenz des Druckschwingungssignals die Kraftstoffzusammensetzung zu ermitteln wird die ermittelte Phasenlage mit sogenannten Referenz-Phasenlagen der gleichen Signalfrequenz verglichen. Diesen Referenz-Phasenlagen sind die entsprechenden Kraftstoffzusammensetzungen eindeutig zugeordnet. So kann über die mit der ermittelten Phasenlage übereinstimmende Referenz-Phasenlage auf die zugeordnete Kraftstoffzusammensetzung geschlossen werden.

Zur Erläuterung der Funktionsweise eines der Erfindung zugrundeliegenden Verbrennungsmotors sowie der Zusammenhänge zwischen Kraftstoffzusammensetzung und Phasenlage des im Saugrohr gemessenen Druckschwingungssignals bzw. einer bestimmten ausgesuchten Signalfrequenz wird auf die Figuren Bezug genommen. Es zeigt:
- Figur 1: eine vereinfachte Darstellung eines hier verkürzt als Verbrennungsmotor bezeichneten Hubkolben-Verbrennungsmotor mit den wichtigsten Funktionskomponenten;
- Figur 2: ein Diagramm zur Darstellung der Abhängigkeit zwischen der Phasenlage der Ansaugfrequenz und dem Ethanol-Anteil des verwendeten Kraftstoffes;
- Figur 3: ein Diagramm zur Zuordnung von Referenz-Phasenlagen der Ansaugfrequenz zu dem jeweiligen Ethanol-Anteil verschiedener Referenz-Kraftstoffe.

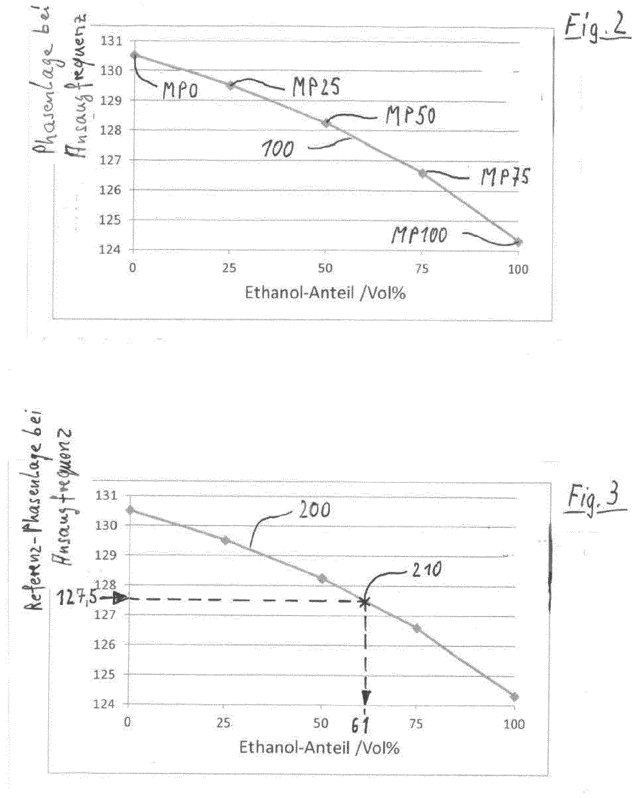

Bei der Durchführung des erfindungsgemäßen Verfahrens wird vorausgesetzt, dass der Zusammenhang bzw. die Abhängigkeit der genannten Größen voneinander eindeutig bekannt ist. Figur 2 zeigt diesen Zusammenhang anhand der Phasenlage der Ansaugfrequenz in Abhängigkeit von dem Ethanol-Anteil im Kraftstoff. Es zeigt sich dabei eine Verschiebung der Phasenlage der Ansaugfrequenz hin zu kleineren Werten bei zunehmendem Ethanol-Anteil im Kraftstoff. Durch Interpolation zwischen den einzelnen Messpunkten MP0 bis MP100 ergibt sich eine stetig verlaufende Kurve 100 mit nahezu linearem Verlauf.

Zur einfachen Durchführung des erfindungsgemäßen Verfahrens werden deshalb die zuvor an einem Referenz-Verbrennungsmotor der Serie baugleicher Verbrennungsmotoren unter Verwendung von Referenz-Kraftstoffzusammensetzungen ermittelten Referenz-Phasenlagen in Abhängigkeit von den zugehörigen Kraftstoffzusammensetzungen in Referenz-Kennfeldern gespeichert, aus denen sie zum Vergleich abgerufen werden können. Die einfachste Form eines solchen Kennfeldes ist in Figur 3 beispielhaft dargestellt und besteht in einem Diagramm, das, für einen bestimmten Betriebspunkt des Verbrennungsmotors, die Abhängigkeit zwischen der Referenz-Phasenlage einer bestimmten, ausgesuchten Signalfrequenz des Druckschwingungssignals, in diesem Fall die Ansaugfrequenz, und der jeweils zugehörigen Kraftstoffzusammensetzung, hier der Ethanol-Anteil, in Form einer Referenzkurve 200 abbildet.

Ein entsprechendes umfangreicheres Kennfeld kann beispielsweise entsprechende Referenzkurven für unterschiedliche Betriebspunkte des Verbrennungsmotors und unterschiedliche Signalfrequenzen enthalten.

Die Ermittlung der Zusammensetzung des aktuell verwendeten Kraftstoffes kann in diesem Beispiel dann auf einfache Weise derart erfolgen, dass ausgehend von der ermittelten Ist-Phasenlage der Ansaugfrequenz im Normalbetrieb des Verbrennungsmotors, in Figur 3 bei Phasenlage 127,5, der zugehörige Punkt 210 auf der Referenzkurve 200 ermittelt und ausgehend wiederum von diesem, die zugehörige Kraftstoffzusammensetzung, hier Ethanol-Anteil von 61 Vol%, ermittelt wird, wie anhand der gestrichelten Linie in Figur 3 bildlich dargestellt.

Eine weitere alternative Möglichkeit besteht darin, eine die entsprechende Referenzkurve charakterisierende Modell-Funktion, die den Zusammenhang zwischen Referenz-Phasenlage und der Kraftstoffzusammensetzung abbildet, bereitzustellen und unter Vorgabe der ermittelten Ist-Phasenlage die Kraftstoffzusammensetzung damit aktuell zu berechnen. Der Vorteil dieser Alternative liegt darin, dass insgesamt weniger Speicherkapazität zur Verfügung gestellt werden muss.

Um in Weiterbildung des Verfahrens die Genauigkeit der Ermittlung der Zusammensetzung des verwendeten Kraftstoffs weiter zu steigern können zusätzliche Betriebsparameter des Verbrennungsmotors bei der Ermittlung der Kraftstoffzusammensetzung herangezogen werden. Dazu kann zumindest einer der weiteren Betriebsparameter
- Temperatur des angesaugten Mediums im Ansaugtrakt,
- Temperatur eines zur Kühlung des Verbrennungsmotors verwendeten Kühlmittels und
- Motordrehzahl des Verbrennungsmotors,
   bei der Ermittlung der Kraftstoffzusammensetzung des verwendeten Kraftstoffes herangezogen werden.

Die Temperatur des angesaugten Mediums, also im Wesentlichen der Ansaugluft, beeinflusst direkt die Schallgeschwindigkeit im Medium und somit die Druckausbreitung im Einlasstrakt. Diese Temperatur kann im Ansaugtrakt gemessen werden und ist somit bekannt.

Auch die Temperatur des Kühlmittels kann die Schallgeschwindigkeit im Angesaugten Medium durch Wärmeübertragung im Einlasskanal und im Zylinder beeinflussen. Auch diese Temperatur wird in der Regel überwacht und dazu gemessen, steht also ohnedies bereit und kann bei der Ermittlung der Kraftstoff Zusammensetzung herangezogen werden.

Die Motordrehzahl ist eine der den Betriebspunkt des Verbrennungsmotors charakterisierenden Größen und beeinflusst die verfügbare Zeit für die Druckausbreitung im Einlasskanal. Auch die Motordrehzahl wird ständig überwacht und steht somit bei der Ermittlung der Kraftstoffzusammensetzung zur Verfügung.

Die vorgenannten zusätzlichen Parameter stehen also ohnedies zur Verfügung oder können auf einfache Weise ermittelt werden. Der jeweilige Einfluss der genannten Parameter auf die Phasenlage der ausgesuchten Signalfrequenz des Druckschwingungssignals wird dabei als bekannt vorausgesetzt und wurde beispielsweise bei der Vermessung eines Referenz-Verbrennungsmotors ermittelt und in den Referenzwert-Kennfeldern mit abgespeichert. Auch die Einbeziehung mittels entsprechender Korrekturfaktoren oder Korrekturfunktionen bei der Berechnung der Kraftstoffzusammensetzung mittels einer Modell-Funktion stellt eine Möglichkeit dar, diese zusätzlichen, weiteren Betriebsparameter bei der Ermittlung der Kraftstoffzusammensetzung zu berücksichtigen.

In einer vorteilhaft einsetzbaren Ausführung des erfindungsgemäßen Verfahrens erfolgt die Ermittlung der Ist-Phasenlage der ausgesuchten Signalfrequenz sowie die Ermittlung der Zusammensetzung des aktuell verwendeten Kraftstoffes mit Hilfe einer dem Verbrennungsmotor zugeordneten elektronischen Recheneinheit, beispielsweise der zentralen Motor-Steuereinheit (CPU), wobei die Referenzwert-Kennfelder oder die Modell-Funktion in zumindest einem Speicherbereich der elektronischen Recheneinheit gespeichert sind. Auf diese Weise lässt sich das erfindungsgemäße Verfahren automatisch, sehr schnell und wiederkehrend im Betrieb des Verbrennungsmotors durchführen.

Wie zuvor bereits angedeutet, wird davon ausgegangen, dass die Referenz-Phasenlagen für unterschiedliche Kraftstoffzusammensetzungen zur Durchführung des Verfahrens zur Verfügung stehen.

Dazu werden in Erweiterung des erfindungsgemäßen Verfahrens die Referenz-Phasenlagen der ausgesuchten Signalfrequenzen vorausgehend an einem Referenz-Verbrennungsmotor in Abhängigkeit von unterschiedlichen Kraftstoffzusammensetzungen ermittelt. Der Referenz-Verbrennungsmotor ist dabei ein zu der entsprechenden Verbrennungsmotorserie baugleicher Verbrennungsmotor, bei dem insbesondere sichergestellt ist, dass keine das Verhalten beeinflussende bauliche Toleranzabweichungen vorhanden sind. Dadurch soll gewährleistet werden, dass der Zusammenhang zwischen Kraftstoffzusammensetzung und Phasenlage möglichst genau und ohne Einfluss weiterer Störfaktoren ermittelt wird.

Die Ermittlung entsprechender Referenz-Phasenlagen kann mit Hilfe des Referenz-Verbrennungsmotors in unterschiedlichen Betriebspunkten und unter Vorgabe bzw. Variation weiterer Betriebsparameter wie der Temperatur des angesaugten Mediums, der Kühlmitteltemperatur oder der Motordrehzahl erfolgen. Die so entstehenden Referenzwert-Kennfelder können dann vorteilhaft bei allen baugleichen Verbrennungsmotoren der Serie zur Verfügung gestellt, insbesondere in einem Speicherbereich einer dem Verbrennungsmotor zuordenbaren elektronischen Recheneinheit abgelegt werden.

In Fortführung der vorgenannten vorausgehenden Ermittlung der Referenz-Phasenlagen der ausgesuchten Signalfrequenzen kann aus den ermittelten Referenz-Phasenlagen der ausgesuchten Signalfrequenz und den zugeordneten Kraftstoff Zusammensetzungen eine Modell-Funktion hergeleitet werden, die zumindest den Zusammenhang zwischen den Referenz-Phasenlagen der ausgesuchten Signalfrequenz und den Kraftstoffzusammensetzungen abbildet. Hierbei können optional auch die oben genannten weiteren Parameter mit einbezogen werden. So entsteht eine Modell-Funktion mit der unter Vorgabe der Phasenlage und ggf. unter Einbeziehung der oben genannten Variablen die jeweilige Kraftstoffzusammensetzung aktuell berechnet werden kann.

Die Modell-Funktion kann dann vorteilhaft bei allen baugleichen Verbrennungsmotoren der Serie zur Verfügung gestellt, insbesondere in einem Speicherbereich einer dem Verbrennungsmotor zuordenbaren elektronischen Recheneinheit abgelegt werden. Die Vorteile liegen darin, dass die Modell-Funktion weniger Speicherplatz benötigt als umfangreiche Referenzwert-Kennfelder.

In einem Durchführungsbeispiel kann die vorausgehende Ermittlung der Referenz-Phasenlagen der ausgesuchten Signalfrequenz durch die Vermessung eines Referenz-Verbrennungsmotors an zumindest einem definierten Betriebspunkt bei saugsynchroner Kraftstoffeinspritzung, unter Verwendung von Referenz-Kraftstoffen unterschiedlicher, bekannter Kraftstoffzusammensetzungen, erfolgen. Dabei werden zur Bestimmung der Referenz-Phasenlagen der ausgesuchten Signalfrequenz die einem Zylinder des Referenz-Verbrennungsmotors zuordenbaren dynamischen Druckschwingungen im Einlasstrakt, im Betrieb gemessen und ein entsprechendes Druckschwingungssignal wird erzeugt.

Gleichzeitig zur Messung der dynamischen Druckschwingungen wird ein Kurbelwellen-Phasenwinkelsignal ermittelt. In der Folge wird die Referenz-Phasenlage der ausgesuchten Signalfrequenz der gemessenen Druckschwingungen in Bezug auf das Kurbelwellen-Phasenwinkelsignal mit Hilfe Diskreter-Fourier-Transformation aus dem Druckschwingungssignal ermittelt.

Die ermittelten Referenz-Phasenwinkel werden dann in Abhängigkeit der zugeordneten Kraftstoffzusammensetzungen in Referenzwert-Kennfeldern gespeichert. Dies ermöglicht die zuverlässige Ermittlung der Abhängigkeit zwischen Kraftstoffzusammensetzung und Phasenlage der ausgesuchten Signalfrequenz.

Die vorgenannte Vorgehensweise kann unter Variation bestimmter einflussnehmender Betriebsparameter, zum Beispiel an verschiedenen Betriebspunkten, wiederholt werden, um die Datenbasis zu verbreitern und die Einflüsse der weiteren Parameter mit einzubeziehen. Dies erleichtert die Durchführung des Verfahrens im Betrieb, man dann bei der Durchführung des Verfahrens ggf. nicht auf die exakte Einhaltung bestimmter Parameter angewiesen ist.

Als vorteilhaft hat es sich erwiesen als ausgesuchte Signalfrequenzen die Ansaugfrequenz oder eine vielfache der Ansaugfrequenz zu wählen. Bei diesen Signalfrequenzen tritt die Abhängigkeit der Phasenlage von der Kraftstoffzusammensetzung besonders deutlich hervor.

Weiterhin vorteilhaft können zur Durchführung des erfindungsgemäßen Verfahrens die dynamischen Druckschwingungen im Ansaugtrakt mithilfe eines serienmäßigen Drucksensors im Saugrohr gemessen werden. Dies hat den Vorteil, dass kein zusätzlicher Drucksensor benötigt wird, was einen Kostenvorteil darstellt.

In einem weiteren Beispiel kann zur Durchführung des erfindungsgemäßen Verfahrens das Kurbelwellenpositions-Feedbacksignal mit einem Zähnerad und einem Hall-Sensor ermittelt werden, wobei es sich hierbei um eine gebräuchliche, ggf. ohnehin im Verbrennungsmotor vorhandene Sensoranordnung zur Erfassung der Kurbelwellenumdrehungen handelt. Das Zähnerad ist dabei beispielsweise am äußeren Umfang einer Schwungscheibe oder des Kurbelwellen-Steueradapters 10 (siehe auch Figur 1) angeordnet. Dies hat den Vorteil, dass keine zusätzliche Sensor-Anordnung benötigt wird, was einen Kostenvorteil darstellt.

Besonders vorteilhaft kann das erfindungsgemäße Verfahren durchgeführt werden, wenn die elektronische Recheneinheit, mit deren Hilfe das Verfahren durchgeführt und auf der die Referenzwert-Kennfelder oder die Modellfunktion gespeichert sind, ein Motor-Steuergerät zur Steuerung des Verbrennungsmotors ist und eine Anpassung weiterer Steuergrößen oder Steuerroutinen zur Steuerung des Verbrennungsmotors in Abhängigkeit von der ermittelten Kraftstoff Zusammensetzung durch das Motor-Steuergerät vorgenommen wird.

Dies hat zum Einen den Vorteil, dass keine Separate elektronische Recheneinheit erforderlich ist und so auch keine zusätzlichen, ggf. störungsanfälligen Schnittstellen zwischen mehreren Recheneinheiten bestehen. Zum Anderen kann das erfindungsgemäße Verfahren so zum integralen Bestandteil der Steuerungsroutinen des Verbrennungsmotors werden, wodurch eine schnelle Anpassung der Steuergrößen oder Steuerroutinen für den Verbrennungsmotor auf den aktuell verwendeten Kraftstoff erfolgen kann.

## Patentansprüche

1. Verfahren zur Ermittlung der Zusammensetzung des zum Normalbetrieb eines Verbrennungsmotors verwendeten Kraftstoffes,
- wobei einem Zylinder des Verbrennungsmotors zuordenbare dynamische Druckschwingungen im Einlasstrakt des betreffenden Verbrennungsmotors, an einem definierten Betriebspunkt bei saugsynchroner Kraftstoffeinspritzung, im Normalbetrieb gemessen werden und daraus ein entsprechendes Druckschwingungssignal erzeugt wird und wobei gleichzeitig ein Kurbelwellen-Phasenwinkelsignal des Verbrennungsmotors ermittelt wird und
- wobei aus dem Druckschwingungssignal, unter Heranziehung des gleichzeitig erfassten Kurbelwellen-Phasenwinkelsignals, mit Hilfe Diskreter-Fourier-Transformation die Ist-Phasenlage einer ausgesuchten Signalfrequenz der gemessenen Druckschwingungen in Bezug auf den Kurbelwellen-Phasenwinkel ermittelt wird,
- wobei die ausgesuchte Signalfrequenz eine Ansaugfrequenz oder eine vielfache der Ansaugfrequenz des Verbrennungsmotors ist, **dadurch gekennzeichnet, dass**
- auf Basis der ermittelten Ist-Phasenlage, unter Heranziehung von Referenz-Phasenlagen der gleichen Signalfrequenz für unterschiedliche Kraftstoffzusammensetzungen, die Zusammensetzung des aktuell verwendeten Kraftstoffes ermittelt wird.

2. Verfahren nach Anspruch 1, **dadurch gekennzeichnet, dass** die Referenz-Phasenlagen in Abhängigkeit von der Kraftstoffzusammensetzung in Referenzwert-Kennfeldern bereitgestellt sind oder eine Modell-Funktion bereitgestellt ist, die den Zusammenhang zwischen Referenz-Phasenlage und Kraftstoffzusammensetzung abbildet.

3. Verfahren nach Anspruch 1 oder 2, **dadurch gekennzeichnet, dass** zusätzlich zumindest einer der weiteren Betriebsparameter
- Temperatur des angesaugten Mediums im Ansaugtrakt,
- Temperatur eines zur Kühlung des Verbrennungsmotors verwendeten Kühlmittels,
- Motordrehzahl des Verbrennungsmotors,
bei der Ermittlung der Kraftstoffzusammensetzung des verwendeten Kraftstoffes herangezogen wird.

4. Verfahren nach Anspruch 2, **dadurch gekennzeichnet, dass** die Ermittlung der Ist-Phasenlage der ausgesuchten Signalfrequenz sowie die Ermittlung der Zusammensetzung des aktuell verwendeten Kraftstoffes mit Hilfe einer dem Verbrennungsmotor zugeordneten elektronischen Recheneinheit erfolgt, wobei die Referenzwert-Kennfelder oder die Modell-Funktion in zumindest einem Speicherbereich der elektronischen Recheneinheit gespeichert sind

5. Verfahren nach einem der Ansprüche 1 oder 2, **dadurch gekennzeichnet, dass** die Referenz-Phasenlagen der ausgesuchten Signalfrequenz vorausgehend an einem Referenz-Verbrennungsmotor in Abhängigkeit von unterschiedlichen Kraftstoffzusammensetzungen ermittelt wurden.

6. Verfahren nach Anspruch 5, **dadurch gekennzeichnet, dass** aus den Referenz-Phasenlagen der ausgesuchten Signalfrequenz und den zugeordneten Kraftstoffzusammensetzungen eine Modell-Funktion hergeleitet wurde, die den Zusammenhang zwischen den Referenz-Phasenlagen der ausgesuchten Signalfrequenz und den Kraftstoffzusammensetzungen abbildet.

7. Verfahren nach Anspruch 5, wobei die vorausgehende Ermittlung der Referenz-Phasenlagen der ausgesuchten Signalfrequenz **gekennzeichnet ist durch** die Vermessung eines Referenz-Verbrennungsmotors an zumindest einem definierten Betriebspunkt bei saugsynchroner Kraftstoffeinspritzung, unter Verwendung von Referenz-Kraftstoffen unterschiedlicher, bekannter Kraftstoffzusammensetzungen,
wobei zur Bestimmung der Referenz-Phasenlagen der ausgesuchten Signalfrequenz
- die einem Zylinder des Referenz-Verbrennungsmotors zuordenbaren dynamischen Druckschwingungen im Einlasstrakt, im Betrieb gemessen und ein entsprechendes Druckschwingungssignal erzeugt wird und
- wobei gleichzeitig ein Kurbelwellen-Phasenwinkelsignal ermittelt wird und
- die Referenz-Phasenlage der ausgesuchten Signalfrequenz der gemessenen Druckschwingungen in Bezug auf das Kurbelwellen-Phasenwinkelsignal aus dem Druckschwingungssignal mit Hilfe Diskreter-Fourier-Transformation ermittelt wird und
- die ermittelten Referenz-Phasenwinkel in Abhängigkeit der zugeordneten Kraftstoffzusammensetzungen in Referenzwert-Kennfeldern gespeichert werden.

8. Verfahren nach einem der vorangehenden Ansprüche, **dadurch gekennzeichnet, dass** die dynamischen Druckschwingungen mithilfe eines serienmäßigen Drucksensors im Saugrohr gemessen werden.

9. Verfahren nach einem der vorangehenden Ansprüche, **dadurch gekennzeichnet, dass** das Kurbelwellenpositions-Feedbacksignal mit einem Zähnerad und einem Hall-Sensor ermittelt wird.

10. Verfahren nach einem der Ansprüche 4 bis 9, **dadurch gekennzeichnet, dass** die elektronische Recheneinheit ein Motor-Steuergerät zur Steuerung des Verbrennungsmotors ist und eine Anpassung weiterer Steuergrößen oder Steuerroutinen zur Steuerung des Verbrennungsmotors in Abhängigkeit von der ermittelten Kraftstoff Zusammensetzung durch das Motor-Steuergerät vorgenommen wird.

## Claims

1. Method for ascertaining the composition of the fuel used for the normal operation of an internal combustion engine,
- wherein dynamic pressure oscillations, assignable to a cylinder of the internal combustion engine, in the inlet tract of the internal combustion engine in question are measured during normal operation at a defined operating point with intake-synchronous fuel injection, and a corresponding pressure oscillation signal is generated from this, and wherein, at the same time, a crankshaft phase angle signal of the internal combustion engine is ascertained, and
- wherein, from the pressure oscillation signal, taking into consideration the simultaneously detected crankshaft phase angle signal, discrete Fourier transformation is used to ascertain the actual phase position of a selected signal frequency of the measured pressure oscillations in relation to the crankshaft phase angle,
- wherein the selected signal frequency is an intake frequency or a multiple of the intake frequency of the internal combustion engine, **characterized in that**,
- the composition of the presently used fuel is ascertained on the basis of the ascertained actual phase position taking into consideration reference phase positions of the same signal frequency for different fuel compositions.

2. Method according to Claim 1, **characterized in that** the reference phase positions are provided as a function of the fuel composition in reference value characteristic maps, or a model function is provided which replicates the relationship between reference phase position and fuel composition.

3. Method according to Claim 1 or 2, **characterized in that**, in addition, at least one of the further operating parameters
- temperature of the taken-in medium in the intake tract,
- temperature of a coolant used for cooling the internal combustion engine,
- engine rotational speed of the internal combustion engine, is taken into consideration in the ascertainment of the fuel composition of the fuel used.

4. Method according to Claim 2, **characterized in that** the ascertainment of the actual phase position of the selected signal frequency and the ascertainment of the composition of the presently used fuel is performed with the aid of an electronic processing unit assigned to the internal combustion engine, wherein the reference value characteristic maps or the model function are stored in at least one memory region of the electronic processing unit.

5. Method according to either of Claims 1 and 2, **characterized in that** the reference phase positions of the selected signal frequency have been ascertained in advance on a reference internal combustion engine as a function of different fuel compositions.

6. Method according to Claim 5, **characterized in that**, from the reference phase positions of the selected signal frequency and the associated fuel compositions, a model function has been derived which replicates the relationship between the reference phase positions of the selected signal frequency and the fuel compositions.

7. Method according to Claim 5, wherein the ascertainment, in advance, of the reference phase positions of the selected signal frequency is **characterized by** the measurement of a reference internal combustion engine at at least one defined operating point with intake-synchronous fuel injection using reference fuels of different, known fuel compositions,
wherein, for the determination of the reference phase positions of the selected signal frequency,
- the dynamic pressure oscillations, assignable to a cylinder of the reference internal combustion engine, in the inlet tract are measured during operation, and a corresponding pressure oscillation signal is generated, and
- wherein, at the same time, a crankshaft phase angle signal is ascertained, and
- the reference phase position of the selected signal frequency of the measured pressure oscillations in relation to the crankshaft phase angle signal is ascertained from the pressure oscillation signal with the aid of discrete Fourier transformation, and
- the ascertained reference phase angles are stored as a function of the associated fuel compositions in reference value characteristic maps.

8. Method according to any of the preceding claims, **characterized in that** the dynamic pressure oscillations are measured with the aid of a standard pressure sensor in the intake pipe.

9. Method according to any of the preceding claims, **characterized in that** the crankshaft position feedback signal is ascertained by means of a toothed wheel and a Hall sensor.

10. Method according to any of Claims 4 to 9, **characterized in that** the electronic processing unit is an engine control unit for the control of the internal combustion engine, and an adaptation of further control variables or control routines for the control of the internal combustion engine is performed by the engine control unit in a manner dependent on the ascertained fuel composition.

## Revendications

1. Procédé pour déterminer la composition du carburant utilisé pour le fonctionnement normal d'un moteur à combustion interne
- dans lequel des oscillations de pression dynamiques, qui peuvent être associées à un cylindre du moteur à combustion interne dans le circuit d'admission du moteur à combustion interne concerné, sont mesurées pendant le fonctionnement normal en un point de fonctionnement défini avec une injection de carburant synchrone de l'admission, et un signal d'oscillation de pression correspondant est généré à partir de celles-ci, et dans lequel un signal d'angle de phase du vilebrequin du moteur à combustion interne est simultanément déterminé et
- dans lequel la position de phase réelle d'une fréquence de signal sélectionnée des oscillations de pression mesurées relativement à l'angle de phase du vilebrequin est déterminée à partir du signal d'oscillation de pression au moyen d'une transformation de Fourier discrète, en utilisant le signal d'angle de phase du vilebrequin détecté simultanément,
- dans lequel la fréquence de signal sélectionnée est une fréquence d'admission ou un multiple de la fréquence d'admission du moteur à combustion interne, **caractérisé en ce que**
- la composition du carburant actuellement utilisé est déterminée sur la base de la position de phase réelle déterminée en tenant compte de positions de phase de référence de la même fréquence de signal pour différentes compositions de carburant.

2. Procédé selon la revendication 1, **caractérisé en ce que** les positions de phase de référence sont fournies en fonction de la composition du carburant dans des tables de valeurs de référence ou **en ce qu'**une fonction modélisée représentant la relation entre la position de phase de référence et la composition du carburant est fournie.

3. Procédé selon la revendication 1 ou 2, **caractérisé en ce qu'**il est en outre tenu compte lors de la détermination de la composition du carburant utilisé, d'au moins l'un des autres paramètres de fonctionnement suivants :
- température du fluide aspiré dans le circuit d'admission,
- température d'un fluide de refroidissement utilisé pour refroidir le moteur à combustion interne,
- vitesse de rotation du moteur à combustion interne.

4. Procédé selon la revendication 2, **caractérisé en ce que** la détermination de la position de phase réelle de la fréquence de signal sélectionnée ainsi que la détermination de la composition du carburant actuellement utilisé sont effectuées à l'aide d'une unité de calcul électronique associée au moteur à combustion interne, dans lequel les tables de valeurs de référence ou la fonction modélisée sont stockées dans au moins une zone de mémoire de l'unité de calcul électronique.

5. Procédé selon l'une des revendications 1 ou 2, **caractérisé en ce que** les positions de phase de référence de la fréquence de signal sélectionnée ont été déterminées à l'avance sur un moteur à combustion interne de référence en fonction de différentes compositions du carburant.

6. Procédé selon la revendication 5, **caractérisé en ce qu'**une fonction modélisée qui représente la relation entre les positions de phase de référence de la fréquence de signal sélectionnée et les compositions du carburant a été dérivée des positions de phase de référence de la fréquence de signal sélectionnée et des compositions de carburant associées.

7. Procédé selon la revendication 5, dans lequel la détermination à l'avance des positions de phase de référence de la fréquence de signal sélectionnée est **caractérisée par** la mesure d'un moteur à combustion interne de référence en au moins un point de fonctionnement défini avec injection de carburant synchrone de l'admission, en utilisant des carburants de référence présentant différentes compositions de carburant connues,
dans lequel, pour déterminer les positions de phase de référence de la fréquence de signal sélectionnée,
- les oscillations de pression dynamiques, qui peuvent être associées à un cylindre du moteur à combustion interne de référence dans le circuit d'admission, sont mesurées pendant le fonctionnement et un signal d'oscillation de pression correspondant est généré et
- dans lequel un signal d'angle de phase du vilebrequin est simultanément déterminé et
- la position de phase de référence de la fréquence de signal sélectionnée des oscillations de pression mesurées relativement au signal d'angle de phase du vilebrequin est déterminée à partir du signal d'oscillation de pression au moyen d'une transformation de Fourier discrète et
- les angles de phase de référence déterminés sont stockés dans des tables de valeurs de référence en fonction des compositions de carburant associées.

8. Procédé selon l'une des revendications précédentes, **caractérisé en ce que** les oscillations de pression dynamiques sont mesurées à l'aide d'un capteur de pression de série dans le tube d'admission.

9. Procédé selon l'une des revendications précédentes, **caractérisé en ce que** le signal de retour de position du vilebrequin est déterminé à l'aide d'une roue dentée et d'un capteur à effet Hall.

10. Procédé selon l'une des revendications 4 à 9, **caractérisé en ce que** l'unité de calcul électronique est un appareil de commande de moteur destiné à commander le moteur à combustion interne et **en ce qu'**une adaptation d'autres grandeurs de commande ou de routines de commande est effectuée pour commander le moteur à combustion interne au moyen de l'appareil de commande de moteur en fonction de la composition de carburant déterminée.
